# EUROPÄISCHE PATENTSCHRIFT

(11) **EP 1 254 317 B1**
(45) Veröffentlichungstag und Bekanntmachung des Hinweises auf die Patenterteilung: **24.11.2004**
(21) Anmeldenummer: 01913554.0
(22) Anmeldetag: 31.01.2001
(51) Int. Cl.: F15B 13/04

(54) **VERFAHREN ZUR HERSTELLUNG EINES VENTILKÖRPERS**
METHOD FOR PRODUCING A VALVE BODY
PROCEDE DE FABRICATION D'UN CORPS DE SOUPAPE

(30) Priorität: 07.02.2000 DE 10005290
(43) Veröffentlichungstag der Anmeldung: 06.11.2002
(73) Patentinhaber: Bosch Rexroth AG, 97816 Lohr am Main (DE)
(72) Erfinder: HÖFLING, Klaus, 97816 Lohr am Main (DE)
(74) Vertreter: Winter, Brandl,&Fürniss, Hübner Röss, Kaiser, Polte Partnerschaft
(86) Internationale Anmeldenummer: PCT/DE2001/000373
(87) Internationale Veröffentlichungsnummer: WO 2001/059304

(56) Entgegenhaltungen:
- EP-A- 0 301 726
- DE-A- 3 507 278
- US-A- 4 688 755

## Beschreibung

Die Erfindung betrifft ein Verfahren zur Herstellung eines Ventilkörpers, bei dem im Bereich einer Steuerkante Steuerfenster ausgebildet werden. Die Erfindung betrifft desweiteren einen Ventilkörper, der nach einem derartigen Verfahren herstellbar ist. Ein Verfahren bzw. ein Ventilkörper nach dem Oberbegriff des Anspruchs 1 bzw. 6 ist aus EP-A-301 726 bekannt.

Bei Regelventilen sind zur besseren Steuerbarkeit von kleinen Volumenströmen an den Steuerkanten Anfasungen oder sogenannte Feinsteuerfenster ausgebildet. Durch derartige Feinsteuerfenster läßt sich ein progressiver Kennliniencharakter einstellen. Die Feinsteuerfenster lassen sich beispielsweise durch Fräsen herstellen, wobei die Ausbildung von Steuerfenstern mit sehr geringen Abmessungen zur Steuerung von kleinsten Volumenströmen schwierig ist. Bekannt sind auch Verfahren, bei denen die Steuerfenster durch Senkerodieren hergestellt sind, wobei allerdings ein erheblicher Aufwand erforderlich ist, um die Maßhaltigkeit der Elektrode zu gewährleisten.

Demgegenüber liegt der Erfindung die Aufgabe zugrunde, ein Verfahren zur Herstellung eines Ventilkörpers und einen Ventilkörper zu schaffen, bei dem die Herstellung von Steuerfenstern mit minimalem Aufwand und der erforderlichen Präzision möglich ist.

Diese Aufgabe wird hinsichtlich des Verfahrens durch die Merkmale des Patentanspruchs 1 und hinsichtlich des Ventilkörpers durch die Merkmale des Patentanspruchs 6 gelöst.

Erfindungsgemäß werden die Steuerfenster durch einen Durchbruch ausgebildet, der den Ventilkolben quer zur Längsachse durchsetzt. Dieser Durchbruch wird beim erfindungsgemäßen Verfahren mittels Drahterodieren hergestellt.

Durch die Verwendung einer Drahtelektrode lassen sich auch feinste Steuerfenstergeometrien herstellen. Verfahrensbedingt liegt kein Werkzeugverschleiß vor, so daß eine Serienproduktion mit hoher Präzision möglich ist.

Ein weiterer Vorteil liegt darin, daß durch den Durchbruch mit einem Arbeitsgang zwei diametral angeordnete Steuerfenster ausgebildet werden, so daß der fertigungstechnische Aufwand gegenüber Lösungen, bei denen jedes Steuerfenster durch einen gesonderten Arbeitsgang hergestellt wird, verringert werden kann.

Vorversuche zeigten, daß durch den den gesamten Kolbenquerschnitt durchsetzenden Durchbruch ein verbessertes Durchflußverhalten des mit dem erfindungsgemäßen Ventilkörper versehenen Regelventils erreichbar ist.

Die beim Drahterodieren zur Verfügung stehenden Drähte erlauben die Ausbildung von Durchbrüchen mit einer Breite von 0,2 mm, so daß auch kleinste Durchflußstufen realisierbar sind.

Zum Einführen der Drahtelektrode ist üblicherweise die Ausbildung einer Startbohrung erforderlich. Diese kann durch einen herkömmlichen Bohrvorgang ausgebildet werden. Alternativ kann diese Startbohrung jedoch auch durch Erodieren oder ein sonstiges Abtragverfahren geformt sein.

Die Ventilkörper eines Regelventils haben üblicherweise zumindest einen Ringbund, der im Anschluß an einen radial zurückgesetzten Kolbenhals ausgebildet ist. Erfindungsgemäß würde es bevorzugt, wenn die Startbohrung im Bereich des Kolbenhalses ausgebildet ist und sich der Durchbruch dann ausgehend von der Startbohrung in den Ringbund mit der umlaufenden Steuerkante hinein erstreckt. Dies ermöglicht es, die Startbohrung mit einem größeren Durchmesser als das Steuerfenster auszuführen, da diese im Bereich des Kolbenhalses keinen Einfluß auf das Durchflußverhalten hat. Des weiteren lassen sich mehrfach gestufte Feinsteuerbereiche in einem Arbeitsgang herstellen.

Das Durchflußverhalten des mit einem erfindungsgemäßen Ventilkörper versehenen Ventils läßt sich weiter verbessern, wenn das Steuerfenster innerhalb oder benachbart zu einer großflächigeren Feinsteuerkerbe ausgebildet ist. Diese Feinsteuerkerbe kann dann in herkömmlicher Weise, durch Fräsen oder Senkerodieren hergestellt werden. Das Durchflußverhalten wird dann bei Öffnen des Ventils zunächst von der Geometrie der Feinsteuerkerbe und beim weiteren Öffnen anschließend von der Geometrie des Steuerfensters bestimmt.

Sonstige vorteilhafte Weiterbildungen der Erfindung sind Gegenstand der weiteren Unteransprüche.

Bevorzugte Ausführungsbeispiele der Erfindung werden im folgenden anhand schematischer Zeichnungen näher erläutert. Es zeigen:
Figur 1 einen Schnitt durch ein Regelventil mit einem erfindungsgemäßen Ventilkolben;
Figur 2 ein Detail eines Steuerfensters des Ventilkolbens aus Figur 1;
Figur 3 eine Variante des in Figur 2 dargestellten Steuerfensters;
Figur 4 ein weiteres Ausführungsbeispiel eines Ventilkolbens eines Regelventils;
Figuren 5, 6 Details des Ventilkolbens aus Figur 4 und
Figur 7 eine Kennlinie eines mit einem erfindungsgemäßen Ventilkolben ausgeführten Regelventils.

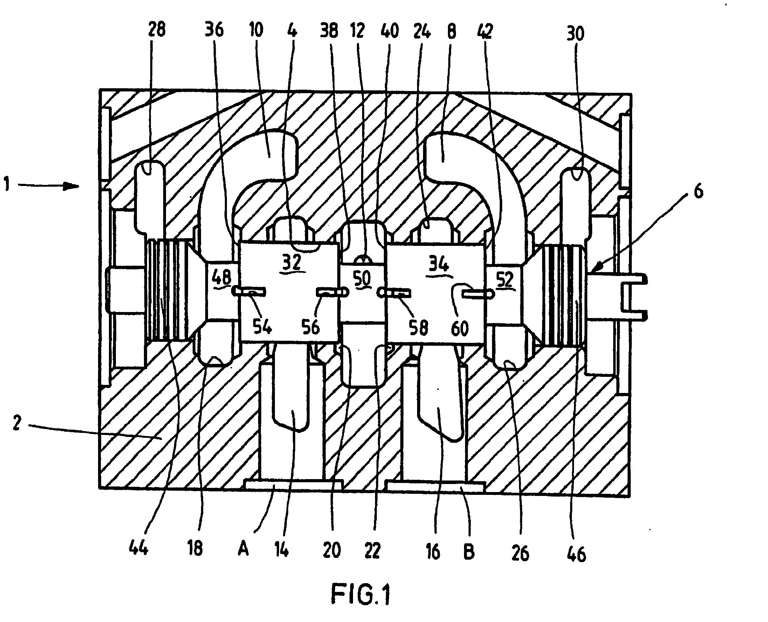

Figur 1 zeigt einen Längsschnitt durch ein proportional verstellbares Regelventil 1. In einem Ventilgehäuse 2 des Regelventils 1 ist eine Ventilbohrung 4 ausgebildet, in der ein Ventilkolben 6 axial verschiebbar geführt ist. Das Ventilgehäuse 2 hat einen nicht dargestellten Tankanschluß, der über zwei Tankkanäle 8, 10 mit der Ventilbohrung 4 verbunden ist. Ein ebenfalls nicht dargestellter Druckanschluß ist über einen Druckkanal 12 mit der Ventilbohrung 6 verbunden. Das Regelventil 1 hat desweiteren noch zwei Arbeitsanschlüsse A, B, von denen Arbeitskanäle 14 bzw. 16 zur Axialbohrung führen. Im Mündungsbereich der Kanäle 8, 10, 12, 14, 16 hat die Ventilbohrung 4 Ringräume 18, 26 (Tankkanäle 8, 10), 20, 24 (Arbeitskanäle 14, 16) bzw. 22 (Durckkanal 12). Die an den Ventilkolben 6 angrenzenden Umfangskanten der Ringräume sind als Steuerkanten ausgebildet.

Die beiden Stirnflächen des Ventilkolbens 6 sind über Kanäle 28, 30 mit dem Tankdruck oder einem Steuerdruck beaufschlagbar. Desweiteren können auf die Stirnflächen des Kolben Federelemente wirken oder der Steuerkolben kann über eine Kupplung mit einem Steuermagneten verbunden werden.

Der Ventilkolben 6 hat zwei mittlere, beabstandete Ringbünde 32, 34, deren Umfangskanten Steuerkanten 36, 38, 40 und 42 ausbilden. Die in der Ventilbohrung geführten Endabschnitte des Ventilkolbens 6 werden durch Stirnbünde 44, 46 gebildet. Die zwischen den vorgenannten Bünden 44, 32, 34 und 46 ausgebildeten radial zurückgesetzten Kolbenhälse sind in Figur 1 mit den Bezugszeichen 48, 50 bzw. 52 gekennzeichnet.

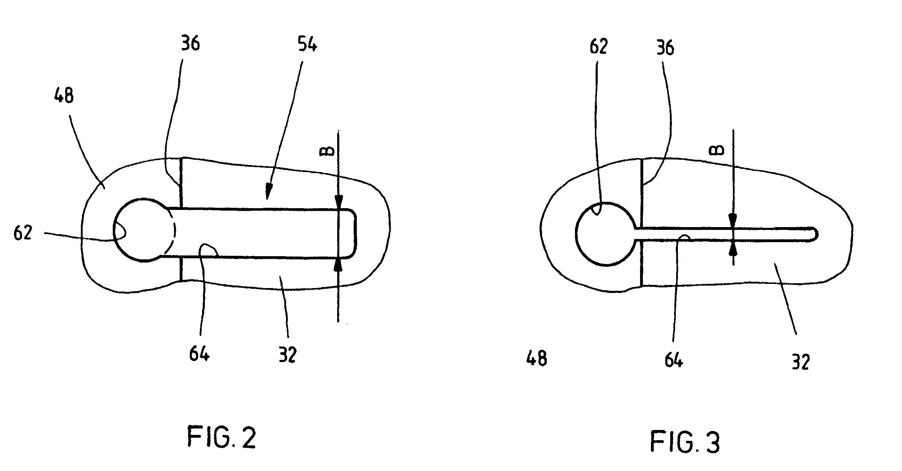

Im Bereich der Steuerkanten 36, 38, 40, 42 sind jeweils zwei diametral zueinander und etwa parallel zur Achse angeordnete Steuerfenster 54, 56, 58, 60 ausgebildet, deren Geometrie anhand Figur 2 erläutert sei. Das in Figur 1 nicht sichtbare zweite Steuerfenster ist jeweils unterhalb der Zeichenebene angeordnet.

Figur 2 zeigt eine vergrößerte Darstellung des in der Steuerkante 36 des Ringbundes 32 ausgebildeten Steuerfensters 54.

Jedes Steuerfenster 54 erstreckt sich vom benachbarten Kolbenhals - in der Darstellung gemäß Figur 2, dem Kolbenhals 48 - aus in den jeweiligen Ringbund 32 ... hinein. Die beiden in der Zeichenebene übereinanderliegenden Steuerfenster 54 sind dabei durch die Umfangskanten eines Durchbruchs begrenzt, der senkrecht zur Zeichenebene in Figur 2 ausgebildet ist. Daß die in Figur dargestellten Steuerfenster 54, 56, 58 60 mittels eines Durchbruchs ausgebildet sind, erkennt man auch daran, daß am Boden des Durchbruchs die Umfangskanten der Ringräume sichtbar sind. Dieser sich quer zur Achse des Ventilkolbens 6 erstreckende Durchbruch ist durch Drahterodieren hergestellt. Bei einem derartigen funkenerosiven Abtragverfahren wird das Werkstück und eine Drahtelektrode mit einer pulsierenden Gleichspannung beaufschlagt. Zwischen der Drahtelektrode und dem Werkstück befindet sich ein Dielektrikum, das durch aufgrund der pulsierenden Gleichspannung entstehenden Ionen und Werkstoffteilen leitfähig gemacht wird. Dies führt entlang eines Ladungskanals zwischen der Drahtelektrode und dem Werkstück zu einem Funkenüberschlag, wobei Temperaturen bis zu 12000 ° C auftreten können, so daß während der Entladungsdauer Werkstoffteilchen aufschmelzen und verdampfen. Bei Pulsende bricht der Entladungskanal zusammen und die Werkstoffteilchen werden aus dem Funkenspalt herausgeschleudert.

Das Material der Drahtelektrode ist dabei derart gewählt, daß der Materialabtrag an der Elektrode gegenüber dem Materialabtrag am Werkstück vernachlässigbar ist. Beim Drahterodieren wird die Drahtelektrode üblicherweise von einem Speicher abgewickelt, so daß während der Erodierbearbeitung praktisch keine Maßänderung der Drahtelektroden messbar ist.

Die minimale Abmessung des durch die Drahtelektrode gebildeten Durchbruchs ist durch den Durchmesser des Drahtes begrenzt. Es bereitet derzeit keine Probleme über das Drahterodierverfahren Schlitzweiten mit einer Weite von 0,2 mm auszubilden.

Bei dem erfindungsgemäßen Verfahren wird zunächst eine Startbohrung 62 ausgebildet, die bei dem in Figur 2 dargestellten Ausführungsbeispiel den Kolbenhals 56 in Radialrichtung durchsetzt. Die Startbohrung 62 kann in herkömmlicher Weise durch Bohren oder durch Senkerodieren ausgebildet werden.

Nach Ausbildung der Startbohrung 62 wird die Drahtelektrode eingeführt und ein Steuerschlitz 64 erodiert. Dieser Steuerschlitz 64 kann eine geringere Breite B als der Durchmesser der Startbohrung aufweisen. Je nach Durchmesser der Drahtelektrode kann der Steuerschlitz 64 dabei ausgehend von der Startbohrung 62 durch Umfahren eines Querschnitts, beispielsweise eines Rechteckes ausgebildet werden, oder aber wie in Figur 3 angedeutet, lediglich durch Erodieren eines Steuerschlitzes 64, dessen Breite B dem Durchmesser der Drahtelektrode entspricht. D.h., im letztgenannten Fall bewegt sich die Drahtelektrode von der Startbohrung 62 in Axialrichtung in den Ringbund 32 hinein, wobei der Steuerschlitz 64 vollständig ausgebildet wird, während bei dem in Figur 2 dargestellten Ausführungsbeispiel die Umfangskante des Steuerschlitzes 64 durch Umfahren mit der Drahtelektrode gebildet wird, d.h., der Erodiervorgang beginnt und endet in der Startbohrung 62.

Die Ausbildung der Startbohrung 62 mit vergrößerten Durchmesser im Kolbenhals 48 hat den Vorteil, daß das Durchflußverhalten beim Aufsteuern des Regelkolbens 6 nicht durch die Geometrie der Startbohrung 62 beeinflußt ist. Es ist jedoch durchaus möglich, diese Startbohrung 62 auch an einer geeigneten Stelle des Ringbundes 32 auszubilden.

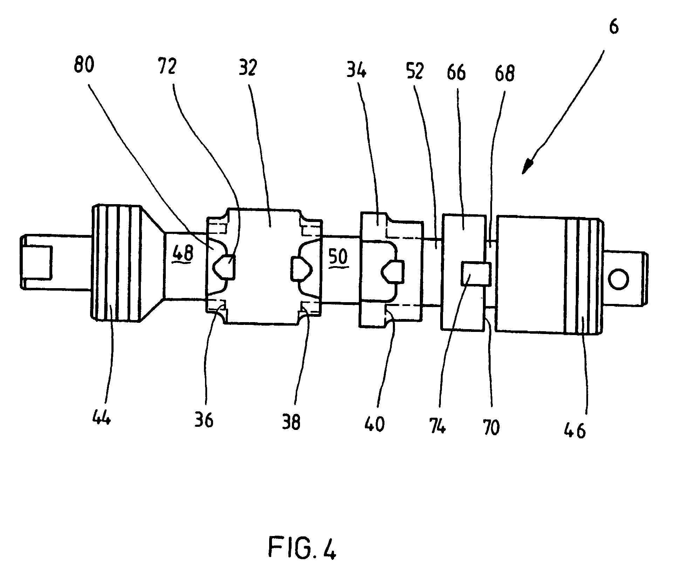

Figur 4 zeigt ein weiteres Ausführungsbeispiel eines Ventilkolbens 6. Dieser ist stirnseitig wiederum mit den beiden Stirnbünden 44, 46 und den Elementen zum Abstützen einer Regelfeder oder zur Verbindung an einen Elektromagneten ausgeführt. Der in Figur 4 dargestellte Ventilkolben 6 hat drei Ringbünde 32, 34 und 66, wobei zwischen den Bünden jeweils ein Kolbenhals 48, 50, 52 bzw. 68 ausgebildet ist.

Die beiden stirnseitigen Umfangskanten des Ringbundes 32 sind konkav angefast, so daß die Steuerkanten 36, 38 gegenüber den Stirnflächen axial nach innen versetzt sind.

Der weitere Ringbund 34 ist zum Kolbenhals 52 hin in Radialrichtung verringert, so daß die zugeordnete Steuerkante 40 ebenfalls gegenüber den beiden Stirnflächen zurückgesetzt ist.

An dem zwischen dem Stirnbund 46 und dem Ringbund 40 angeordneten dritten Ringbund 66 ist eine stirnseitige Steuerkante 70 ausgeformt.

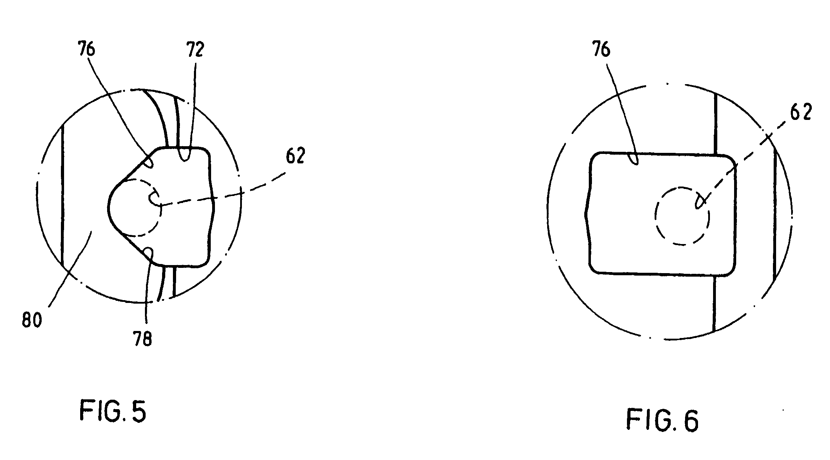

Jede der vorgenannten Steuerkanten 36, 38, 40 bzw. 70 hat diametral zueinander angeordnete Steuerfenster 72 bzw. 74. Die Steuerfenster 72 der Steuerkanten 36, 38, 40 seien anhand der Einzelheit aus Figur 5 und die Geometrie des Steuerfensters 74 der Steuerkante 70 sei anhand der Einzelheit aus Figur 6 erläutert.

Gemäß der Darstellung in Figur 5 hat der das Steuerfenster 72 ausbildende Durchbruch einen etwa trapezprofilförmigen Querschnitt, wobei zwei Trapezschenkel dachförmig aufeinanderzulaufen. Im Scheitelbereich der beiden schräg aufeinander zulaufenden Wandungen 76, 78 wird die gestrichelt angedeutete Startbohrung 62 ausgebildet, die den Ventilkolben 6 in Radialrichtung durchsetzt. Demgemäß wird der Scheitel des Durchbruchs durch diese Startbohrung 62 ausgebildet, die beiden Wandungen 76, 78 verlaufen tagential zur Umfangskante der Startbohrung 62.

Ausgehend von dieser durch Bohren oder Senkerodieren ausgebildeten Startbohrung 62 wird dann mittels einer Drahtelektrode die beschriebene Trapezform ausgebildet. Jedes der Steuerfenster 72 wirkt bei dem in den Figuren 4 und 5 dargestellten Ausführungsbeispiel mit einer muldenförmigen Steuerkerbe 80 zusammen, die in dem die Steuerkante bildenden angefasten Bereich des Ringbundes 32 ausgebildet ist. Diese muldenförmige Steuerkerbe 80 wird in herkömmlicher Weise durch Fräsen, Senkerodieren oder ähnliches hergestellt. Das Steuerfenster 72 bestimmt das Durchflußverhalten bei geringer Öffnung.

Aus der die Einzelheit Y darstellenden Figur 6 ist die Geometrie des Steuerfensters 74 des in Figur 4 rechten Ringbundes 66 entnehmbar. Dieses Steuerfenster 74 ist durch einen Durchbruch mit etwa rechteckförmigem Querschnitt gebildet, der sowohl den benachbarten Kolbenhals 68 als auch einen Teil des Ringbundes 66 in Radialrichtung durchsetzt. Beim vorbeschriebenen Ausführungsbeispiel gemäß Figur 5 durchsetzt der die Steuerfenster 72 ausbildende Durchbruch lediglich den Ringbund 32 bzw. 34.

Wie in Figur 6 gestrichelt angedeutet, wird die Startbohrung 62 im Abstand zu den später ausgebildeten Umfangswandungen innerhalb des Ringbundes 66 ausgebildet. Ausgehend von dieser Startbohrung 62 wird dann mittels der Drahtelektrode der Durchbruch mit dem etwa rechteckförmigen Querschnitt ausgebildet, so daß ein Steuerfenster mit vergleichsweise großem Öffnungsquerschnitt erhalten wird, dessen Durchströmungsquerschnitt bei einer Öffnungsbewegung des Ventilkolbens in Radialrichtung linear zunimmt. Bei dem in Figur 5 dargestellten Steuerfenster ist die lichte Weite der Öffnung im Feinsteuerbereich vom Kolbenhub abhängig.

Wie aus den vorstehenden Ausführungsbeispielen hervorgeht, läßt sich durch das Drahterodieren nahezu jede beliebige Steuerfensterform ausbilden, wobei eine Einschränkung im wesentlichen nur durch den Minimaldurchmesser des Drahtes erfolgt.

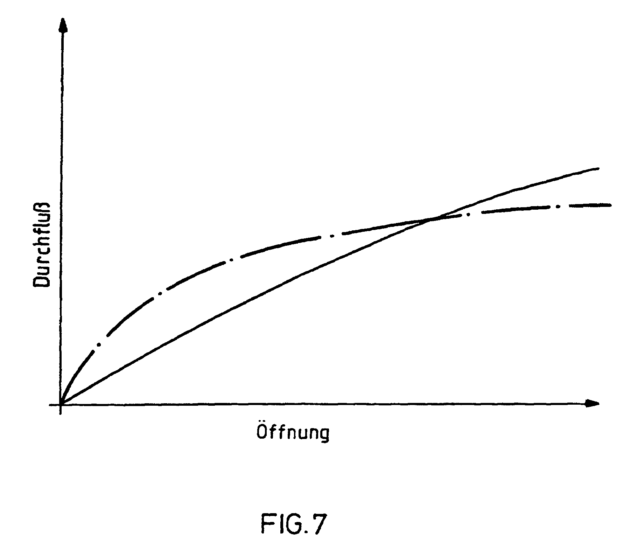

Die bei der durchgängigen Ausbildung von Steuerfenstern möglicherweise anzuführenden Nachteile, wie Verringerung der Biegefestigkeit des Ventilkolbens und eine druckabhängige, partielle Durchmessererweiterung des Kolbens im Bereich der Durchbrüche werden durch die erzielten Vorteile, wie hochpräzise Serienfertigung, Ausbildung feinster Strukturen zur Realisierung kleiner Durchflüsse, gleichzeitige Bearbeitung von zwei Steuerfenstern und Verbesserung des Durchflußverhaltens überwogen. Der letztgenannte Vorteil sei anhand Figur 7 erläutert, die Kennlinien eines herkömmlichen Regelventils und eines mit dem erfindungsgemäßen Ventilkolben ausgeführten Regelventils zeigt. Dargestellt ist die Abhängigkeit des Durchflusses von der Öffnung des Durchflußquerschnittes.

Die strichpunktiert angedeutete Linie zeigt die Kennlinie eines herkömmlichen Ventils, bei der zunächst ein etwa proportionales Ansteigen des Durchflusses mit der Öffnung zu beobachten ist. Die Steigung der Kennlinie nimmt jedoch dann mit steigender Öffnung stark ab, so daß das Ansprechverhalten des Ventils bei größeren Öffnungen verschlechtert wird. Die mit einer durchgezogenen Linie dargestellte Kennlinie zeigt ein Ausführungsbeispiel, bei dem die Steuerfenster mit einer identischen Geometrie wie bei dem strichpunktierten Ausführungsbeispiel ausgebildet sind, die Steuerfenster wurden jedoch durch einen Durchbruch im Sinne der Erfindung ausgebildet. Aus der Kennlinie geht hervor, daß allein durch die Verwendung des erfindungsgemäßen Durchbruches das Durchflußverhalten durch den vergrößerten Abströmungsquerschnitt wesentlich verbessert wird, so daß sich nahezu lineare Kennlinie einstellt.

Offenbart sind ein Verfahren zur Herstellung eines Ventilkolbens und ein Ventilkolben, bei denen der Durchfluß im Feinsteuerbereich über Steuerfenster bestimmt ist, die durch einen den Ventilkörper durchsetzenden Durchbruch ausgebildet sind.

## Patentansprüche

1. Verfahren zur Herstellung eines Ventilkörpers (6), wobei im Bereich einer Steuerkante (36, 38, 40, 42, 70) Steuerfenster (54, 56, 58, 60, 72) ausgebildet werden, **dadurch gekennzeichnet, daß** mittels Drahterodieren ein den gesamten Querschnitt des Ventilkörpers (6) durchsetzender Durchbruch geformt wird, dessen Stirnkanten zumindest einen Teil der Steuerfenster (54, 56, 58, 60, 72) begrenzen.

2. Verfahren nach Patentanspruch 1, wobei vor dem Drahterodieren des Durchbruches eine Startbohrung (62) ausgebildet wird.

3. Verfahren nach Patentanspruch 1 oder 2, wobei das Steuerfenster (54, 56, 58, 60, 72) an einer von einem Ringbund (32, 34, 66) begrenzten Steuerkante (36, 38, 40, 42, 70) ausgebildet und wobei die Startbohrung (62) in einem an dem Ringbund (32, 34, 66) angrenzenden Kolbenhals (48, 50, 52, 68) ausgebildet wird und der Durchbruch sich in den Ringbund (32, 34, 66) erstreckt.

4. Verfahren nach einem der vorhergehenden Patentansprüche, wobei von der Startbohrung (62) weg ein in der Breite (B) verringerter Steuerschlitz (64) ausgebildet wird.

5. Verfahren nach einem der vorhergehenden Patentansprüche, wobei eine Steuerkerbe (80) ausgebildet wird, die gemeinsam mit einem Steuerfenster (76) eine Feinsteuerkerbe bildet und die durch Fräsen, Senkerodieren oder ähnliches ausgebildet wird.

6. Ventilkörper für eine Ventilanordnung, mit einer Steuerkante (36, 38, 40, 42, 70), der ein Steuerfenster (54, 56, 58, 60, 72) zugeordnet ist, **dadurch gekennzeichnet, daß** jeweils zwei Steuerfenster diametral zueinander angeordnet und durch Umfangskanten eines den gesamten Querschnitt des Ventilkörpers durchsetzenden Durchbruches (6) gebildet sind.

7. Ventilkörper nach Patentanspruch 6, wobei der Durchbruch durch Erodieren, vorzugsweise Drahterodieren hergestellt ist.

8. Ventilkörper nach Patentanspruch 6 oder 7, wobei der Durchbruch von einem Kolbenhals (48, 50, 52, 68) aus bis in einen Ringbund (32, 34, 66) des Ventilkörpers (6) hinein ausgebildet ist.

## Claims

1. A method for manufacturing a valve body (6), wherein control windows (54, 56, 58, 60, 72) are formed in the range of a control edge (36, 38, 40, 42, 70), **characterized in that** a through opening extending through the entire cross-section of said valve body (6) is formed by means of wire EDM, with the end face edges of said valve body defining at least a part of said control windows (54, 56, 58, 60, 72).

2. A method in accordance with claim 1, wherein a starting bore (62) is formed prior to formation of said through opening by wire EDM.

3. A method in accordance with claim 1 or 2, wherein said control window (54, 56, 58, 60, 72) is formed at a control edge (36, 38, 40, 42, 70) defined by a ring collar (32, 34, 66), and wherein said starting bore (62) is formed in a piston neck (48, 50, 52, 68) adjacent said ring collar (32, 34, 66), and said through opening extends into said ring collar (32, 34, 66).

4. A method in accordance with any one of the preceding claims, wherein a control slot (64) having a reduced width (B) is formed starting out.from said starting bore (62).

5. A method in accordance with any one of the preceding claims, wherein a control notch (80) is formed which, jointly with a control window (76), forms a fine control notch and is formed by milling, EDM cavity sinking, or the like.

6. A valve body for a valve assembly, including a control edge (36, 38, 40, 42, 70) to which a control window (54, 56, 58, 60, 72) is associated, **characterized in that** two respective control windows each are arranged diametrically to each other and are formed by peripheral edges of a through opening extending through the entire cross-section of said valve body (6).

7. A valve body in accordance with claim 6, wherein said through opening is produced by erosion, preferably by wire EDM.

8. A valve body in accordance with claim 6 or 7, wherein said through opening is formed starting out from a piston neck (48, 50, 52, 68) as far as into a ring collar (32, 34, 66) of said valve body (6).

## Revendications

1. Procédé de fabrication d'un corps de soupape (6), dans la zone d'une rampe de commande (36, 38, 40, 42, 70) des fenêtres de commande (54, 56, 58, 60, 72) étant formées, **caractérisé en ce que** par étincelage par fil, un passage est formé traversant toute la section transversale du corps de soupape (6), dont les rampes frontales délimitent au moins une partie des fenêtres de commande (54, 56, 58, 60, 72).

2. Procédé selon la revendication 1, un perçage d'amorçage (62) étant formé avant l'étincelage par fil du passage.

3. Procédé selon la revendication 1 ou 2, la fenêtre de commande (54, 56, 58, 60, 72) étant formée sur une rampe de commande (36, 38, 40, 42, 70) délimitée par un collet annulaire (32, 34, 66), et le perçage d'amorçage (62) étant formé sur un col de piston (48, 50, 52, 68) adjacent au collet annulaire (32, 34, 66), et le passage s'étendant dans le collet annulaire (32, 34, 66).

4. Procédé selon l'une quelconque des revendications précédentes, une fente de commande (64) rétrécie au niveau de la largeur (B) étant formée à partir de l'alésage d'amorçage (62).

5. Procédé selon l'une quelconque des revendications précédentes, une came de commande (80) étant formée qui conjointement avec une fenêtre de commande (76) forme une entaille de commande fine et qui est obtenue par fraisage, enfonçage par électroérosion ou similaire.

6. Corps de soupape pour un ensemble de soupape, comprenant une rampe de commande (36, 38, 40, 42, 70) à laquelle est associée une fenêtre de commande (54, 56, 58, 60, 72), **caractérisé en ce que** respectivement deux fenêtres de commande sont disposées diamétralement l'une par rapport à l'autre et formées par des arêtes périphériques d'un passage (6) traversant toute la section transversale du corps de soupape.

7. Corps de soupape selon la revendication 6, le passage étant réalisé par érosion, de préférence par étincelage par fil.

8. Corps de soupape selon la revendication 6 ou 7, le passage étant configuré à partir d'un col de piston (48, 50, 52, 68) jusqu'à dans un collet annulaire (32, 34, 66) du corps de soupape (6).
